# DEMANDE DE BREVET EUROPEEN

(11) **EP 4 640 523 A1**
(43) Date de publication de la demande: **29.10.2025**
(21) Numéro de dépôt: 25160657.0
(22) Date de dépôt: 27.02.2025
(51) Int. Cl.: B62D 7/16, B62D 7/18

(54) **PORTE-FUSEE POUR VEHICULE AUTOMOBILE, ENSEMBLE COMPRENANT UN TEL PORTE-FUSEE, VEHICULE AUTOMOBILE COMPORTANT UN TEL ENSEMBLE ET PROCEDE DE DEMONTAGE D'UN TEL ENSEMBLE**

(30) Priorité: 24.04.2024 FR 2404229
(71) Demandeur: Stellantis Auto SAS, 78300 Poissy (FR)
(72) Inventeur: DIAKOUNE, MOHAMED, 27500 CASABLANCA (MA); BENABOU, HICHAM, 12040 TEMARA (MA)
(74) Mandataire: BCIP

(57) **Abrégé**

Porte-fusée pour véhicule automobile, ensemble comprenant un tel porte-fusée, véhicule automobile comportant un tel ensemble et procédé de démontage d'un tel ensemble.

L'invention concerne un (3) pour véhicule automobile, conçu pour supporter une rotule de direction (7) d'un système de direction dudit véhicule automobile, ledit porte-fusée (3) comportant un pivot (13) et ladite rotule de direction (7) comportant une biellette de direction (9) comportant à l'une de ses extrémités (9a, 9b) un axe (11) destiné à être reçu par ledit pivot (13) dudit porte-fusée (3).

Selon l'invention, le porte-fusée (3) comporte une oreille (15) s'étendant en saillie vers l'extérieur dudit pivot (13) et comportant un orifice taraudé s'étendant en vis-à-vis de ladite biellette de direction (9) lorsque ladite rotule de direction (7) est monté sur ledit porte-fusée (3).

## Description

### [Domaine technique]

L'invention a trait au domaine des véhicules automobiles, en particulier au domaine des systèmes de direction du véhicule automobile.

L'invention concerne plus particulièrement un porte-fusée pour véhicule automobile.

L'invention concerne également un ensemble comprenant un tel porte-fusée et une rotule de direction, ainsi qu'un véhicule automobile comportant un tel ensemble et un procédé de démontage d'un tel ensemble.

### [Etat de la technique antérieure]

Un véhicule automobile comporte, au niveau de chacune de ses roues directrices, une fusée, élément solidaire de chaque extrémité de l'essieu directeur dans lequel sont engagés les moyeux des roues du véhicule automobile.

Chaque moyeu de roue directrice d'un véhicule automobile est monté sur un porte-fusée, au niveau d'un axe.

Au niveau de son extrémité avant, le porte-fusée comporte un pivot monté sur un axe d'une rotule de direction. Un écrou est monté sur l'axe de la rotule de direction afin de réaliser l'assemblage entre le porte-fusée et la rotule de direction.

La rotule de direction comporte une biellette de direction, comportant à l'une de ses extrémités l'axe de la rotule de direction et étant reliée à l'autre de ses extrémités à un mécanisme de crémaillère de direction d'un système de direction du véhicule.

A des fins de maintenance, la rotule de direction peut être amenée à être retirée du porte-fusée.

La fréquence, relativement faible, à laquelle la rotule de direction est retirée du porte-fusée, ainsi que la forte sollicitation résultant du montage de la rotule de direction sur le porte-fusée, entraînent des difficultés de démontage.

Afin de parvenir au retrait de la rotule de direction relativement au porte-fusée, un opérateur est contraint d'utiliser un extracteur de rotule, encore appelé arrache-rotule, conçu pour déboîter la rotule de direction.

L'opérateur doit également dans certains cas de figures utiliser un marteau, en complément de l'extracteur de rotule.

Le recours à ces outils complexifie la mise en oeuvre de cette étape de démontage.

Aussi, la durée d'intervention est relativement longue.

### [Exposé de l'invention]

La présente invention vise à surmonter les inconvénients précités, et concerne pour ce faire un porte-fusée pour véhicule automobile, conçu pour supporter une rotule de direction d'un système de direction dudit véhicule automobile, ledit porte-fusée comportant un pivot et ladite rotule de direction comportant une biellette de direction comportant à l'une de ses extrémités un axe destiné à être reçu par ledit pivot dudit porte-fusée, ledit porte-fusée étant remarquable en ce qu'il comporte une oreille s'étendant en saillie vers l'extérieur dudit pivot et comportant un orifice taraudé s'étendant en vis-à-vis de ladite biellette de direction lorsque ladite rotule de direction est monté sur ledit porte-fusée.

Ainsi, en prévoyant un porte-fusée comportant une oreille comportant un orifice taraudé s'étendant en vis-à-vis de la biellette de direction de la rotule de direction lorsque la rotule de direction est montée sur le porte-fusée, l'opération de démontage de la rotule de direction est réalisée en insérant une vis de desserrage dans l'orifice taraudé et en entraînant la vis de desserrage en rotation jusqu'à ce qu'elle vienne buter contre la biellette de direction de la rotule de direction et en poursuivant la rotation de la vis de desserrage jusqu'à ce que le pivot du porte-fusée soit libéré de l'axe de la rotule de direction sur lequel il est monté.

De la sorte, le démontage de la rotule de direction est opéré au seul moyen d'une vis de desserrage et d'un tournevis, sans recours à l'utilisation d'un extracteur de rotule et éventuellement d'un marteau.

Grâce à la présente invention, on simplifie la mise en oeuvre de l'étape de démontage de la rotule de direction, ce qui permet de réduire considérablement la durée d'intervention de cette étape de maintenance

Selon des caractéristiques optionnelles du porte-fusée selon l'invention :
- l'axe dudit orifice taraudé est colinéaire à l'axe de rotation dudit pivot ;
- ladite oreille comporte une paroi supérieure et une paroi inférieure et l'axe dudit orifice taraudé est perpendiculaire à ladite paroi supérieure et à ladite paroi inférieure de ladite oreille ;
- ledit pivot comporte une paroi supérieure, une paroi inférieure et une paroi périphérique reliant ladite paroi supérieure et ladite paroi inférieure, et ladite oreille s'étend depuis ladite paroi périphérique ;

- ladite oreille comporte une paroi supérieure et ledit pivot comporte une paroi supérieure, et ladite paroi supérieure de ladite oreille est contenue dans un plan distinct d'un plan contenant ladite paroi supérieure dudit pivot ;
- ledit plan contenant ladite paroi supérieure de ladite oreille est situé en-dessous dudit plan contenant ladite paroi supérieure dudit pivot relativement à une direction verticale.

L'invention concerne aussi un ensemble de véhicule automobile, remarquable en ce qu'il comporte :
- un porte-fusée selon l'invention,
- une rotule de direction, ledit axe de ladite rotule de direction étant reçu par ledit pivot dudit porte-fusée et ledit orifice taraudé de ladite oreille s'étendant en vis-à-vis de ladite biellette de direction,
- un organe d'assemblage de ladite rotule de direction sur ledit porte-fusée

L'invention concerne aussi un véhicule automobile comportant un ensemble, remarquable en ce que ledit ensemble est selon l'invention.

L'invention concerne également un procédé de démontage d'un ensemble de véhicule automobile, ledit ensemble étant selon l'invention, ledit procédé de démontage étant remarquable en ce qu'il comporte les étapes suivantes visant à :
- retirer l'organe d'assemblage de ladite rotule de direction sur ledit porte-fusée,
- insérer une vis de desserrage dans ledit orifice taraudé de ladite oreille,
- entraîner ladite vis de desserrage en rotation jusqu'à ce que ladite vis de desserrage vienne buter contre ladite biellette de direction de ladite rotule de direction,
- poursuivre la rotation de ladite vis de desserrage jusqu'à ce que l'axe de ladite rotule de direction libère le pivot dudit porte-fusée.

### [Description des dessins]

D'autres caractéristiques, buts et avantages de l'invention apparaîtront à la lecture de la description détaillée qui suit pour la compréhension de laquelle on se reportera aux dessins annexés dans lesquels :
[Fig. 1] est une vue en perspective d'un ensemble selon l'invention comprenant une porte-fusée et une rotule de direction.
[Fig. 2] est un agrandissement de la zone II de la figure 1, la rotule de direction ayant été retirée.
[Fig. 3] illustre une première étape du procédé de démontage de l'ensemble selon l'invention.
[Fig. 4] illustre une deuxième étape du procédé de démontage de l'ensemble selon l'invention.
[Fig. 5] illustre une troisième étape du procédé de démontage de l'ensemble selon l'invention.

### [Description des modes de réalisation]

Dans la suite de la description, des éléments présentant une structure identique ou des fonctions analogues sont désignés par une même référence.

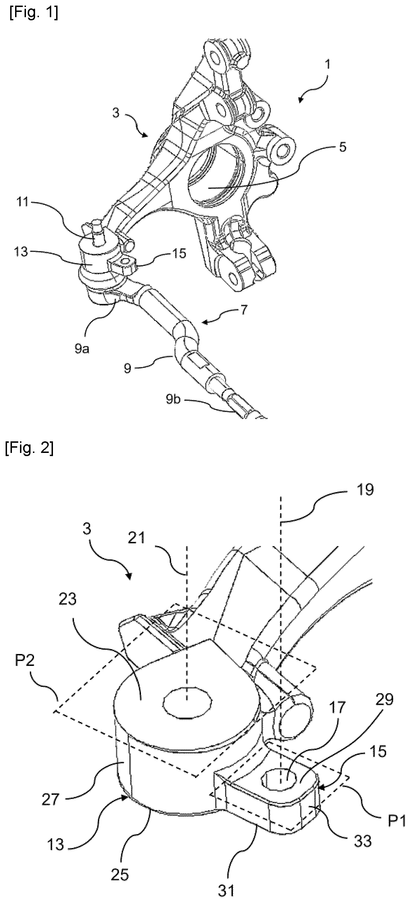

On se réfère à la figure 1 montrant un ensemble 1 de véhicule automobile selon l'invention.

L'ensemble 1 appartient à un système de direction (non représenté) du véhicule automobile.

L'ensemble 1 comporte un porte-fusée 3 consistant en une pièce comportant un axe 5 recevant le moyeu d'une roue directrice (non représentée) du véhicule et étant conçu pour maintenir les roues directrices dans leur axe de rotation.

L'ensemble 1 comporte en outre une rotule de direction 7 du système de direction du véhicule automobile, montée sur le porte-fusée 3. A cet effet, le porte-fusée 3 est conçu pour supporter la rotule de direction 7.

La rotule de direction 7 comporte une biellette de direction 9, comportant à l'une de ses extrémités 9a un axe 11 et étant destiné à être relié à l'autre extrémité 9b à un mécanisme de crémaillère de direction (non représenté) d'un système de direction du véhicule.

Le porte-fusée 3 comporte un pivot 13 apte et destiné à recevoir l'axe 11 de la rotule de direction 7.

Lorsque la rotule de direction 7 est montée sur le porte-fusée 3, l'axe 11 de la rotule de direction 7 est engagé dans le pivot 13 du porte-fusée 3.

L'assemblage est en outre finalisé grâce à un organe d'assemblage (non représenté) assurant le maintien en position de la rotule de direction 7 sur le porte-fusée 3.

Par exemple, l'organe d'assemblage peut consister en un écrou de fixation venant se visser sur l'axe 11 de la rotule de direction 7 de façon à empêcher le dégagement relatif de l'axe 11 et du pivot 13.

Delon l'invention, le porte-fusée 3 comporte une oreille 15, s'étendant en saillie vers l'extérieur du pivot 13.

En complément de la référence faite à la figure 1, on se réfère à la figure 2 montrant un agrandissement de la zone Il de la figure 1, la rotule de direction 7 ayant été retirée.

L'oreille 15 comporte un orifice taraudé 17, s'étendant en vis-à-vis de la biellette de direction 9 lorsque la rotule de direction 7 est montée sur le porte-fusée 3.

Dans l'exemple de réalisation illustré aux figures, l'axe 19 de l'orifice taraudé 17 est sensiblement colinéaire à l'axe de rotation 21 du pivot 13.

Le pivot 13 comporte une paroi supérieure 23, une paroi inférieure 25 et une paroi périphérique 27 assurant la liaison entre la paroi supérieure 23 et la paroi inférieure 25.

Dans l'exemple de réalisation illustré aux figures, l'oreille 15 s'étend depuis la paroi périphérique 27 du pivot 13.

L'oreille 15 comporte une paroi supérieure 29, une paroi inférieure 31 et une paroi périphérique 33 assurant la liaison entre la paroi supérieure 29 et la paroi inférieure 31.

Dans l'exemple de réalisation illustré aux figures, l'axe 19 de l'orifice taraudé 17 est perpendiculaire aux parois supérieure 29 et inférieure 31 de l'oreille 15.

Dans l'exemple de réalisation illustré aux figures, la paroi supérieure 29 de l'oreille 15 est contenue dans un plan P1 distinct d'un plan P2 contenant la paroi supérieure 23 du pivot 13. Par exemple, les plans P1 et P2 sont parallèles entre eux.

Dans l'exemple de réalisation illustré aux figures, le plan P1 contenant la paroi supérieure 29 de l'oreille 15 est situé en-dessous du plan P2 contenant la paroi supérieure 23 du pivot 13 relativement à la direction verticale.

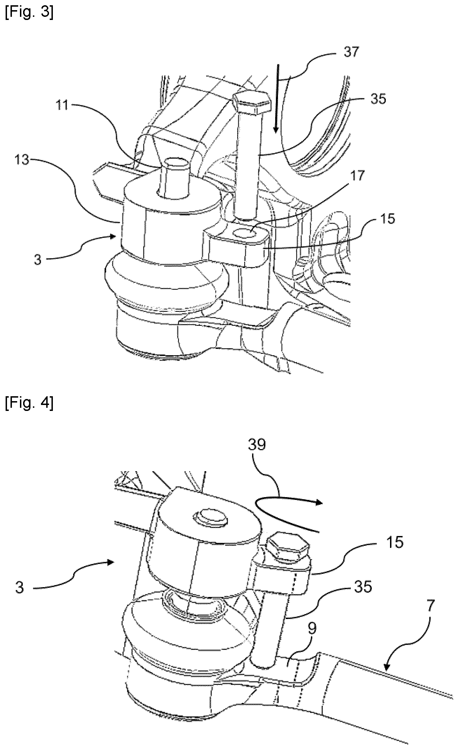

On se réfère aux figures 3 à 5 illustrant les étapes du procédé de démontage de l'ensemble 1 selon l'invention.

Selon l'invention, le démontage de l'ensemble 1 est réalisé par l'exécution des étapes suivantes.

Lorsqu'un opérateur souhaite démonter l'ensemble 1, par exemple à des fins de maintenance, l'organe d'assemblage (non représenté) assurant le maintien en position de la rotule de direction 7 sur le porte-fusée 3 est tout d'abord retiré afin de permettre le dégagement de l'axe 11 relativement au pivot 13.

Ensuite, l'opérateur insère une vis de desserrage 35 dans l'orifice taraudé 17 de l'oreille 15 du porte-fusée 3, comme représenté par la flèche 37 à la figure 3.

La vis de desserrage 35 est entraînée en rotation, comme représenté par la flèche 39 à la figure 4, jusqu'à ce que la vis de desserrage vienne buter contre la biellette de direction 9 de la rotule de direction 7.

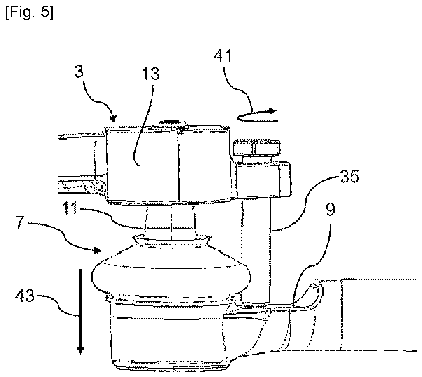

La rotation de la vis de desserrage 35 est alors poursuivie, comme représenté par la flèche 41 à la figure 5. La vis de desserrage 35, en appui contre la biellette de direction 9 de la rotule de direction 7, pousse lors de sa rotation la rotule de direction 7 relativement au porte-fusée 3, comme représenté par la flèche 43 à la figure 5.

La rotation de la vis de desserrage 35 est poursuivie jusqu'à ce que l'axe 11 de la rotule de direction 7 libère le pivot 13 du porte-fusée 3.

Comme il va de soi, la présente invention ne se limite pas aux seules formes de réalisation de ce porte-fusée pour véhicule automobile, de cet ensemble comprenant un tel porte-fusée, de ce véhicule automobile comportant un tel ensemble et de ce procédé de démontage d'un tel ensemble, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention.

## Revendications

1. Porte-fusée (3) pour véhicule automobile, conçu pour supporter une rotule de direction (7) d'un système de direction dudit véhicule automobile, ledit porte-fusée (3) comportant un pivot (13) et ladite rotule de direction (7) comportant une biellette de direction (9) comportant à l'une de ses extrémités (9a, 9b) un axe (11) destiné à être reçu par ledit pivot (13) dudit porte-fusée (3), ledit porte-fusée (3) étant **caractérisé en ce qu'**il comporte une oreille (15) s'étendant en saillie vers l'extérieur dudit pivot (13) et comportant un orifice taraudé (17) s'étendant en vis-à-vis de ladite biellette de direction (9) lorsque ladite rotule de direction (7) est monté sur ledit porte-fusée (3).

2. Porte-fusée (3) selon la revendication 1, **caractérisé en ce que** l'axe (19) dudit orifice taraudé (17) est colinéaire à l'axe de rotation (21) dudit pivot (13).

3. Porte-fusée (3) selon l'une des revendications 1 ou 2, **caractérisé en ce que** ladite oreille (15) comporte une paroi supérieure (29) et une paroi inférieure (31) et **en ce que** l'axe (19) dudit orifice taraudé (17) est perpendiculaire à ladite paroi supérieure (29) et à ladite paroi inférieure (31) de ladite oreille (15).

4. Porte-fusée (3) selon l'une quelconque des revendications 1 à 3, dans lequel ledit pivot (13) comporte une paroi supérieure (23), une paroi inférieure (25) et une paroi périphérique (27) reliant ladite paroi supérieure (23) et ladite paroi inférieure (25), **caractérisé en ce que** ladite oreille (15) s'étend depuis ladite paroi périphérique (27).

5. Porte-fusée (3) selon l'une des revendications 1 ou 2, dans lequel ladite oreille (15) comporte une paroi supérieure (29) et ledit pivot (13) comporte une paroi supérieure (23), **caractérisé en ce que** ladite paroi supérieure (29) de ladite oreille (15) est contenue dans un plan (P1) distinct d'un plan (P2) contenant ladite paroi supérieure (29) dudit pivot (13).

6. Porte-fusée (3) selon la revendication 5, **caractérisé en ce que** ledit plan (P1) contenant ladite paroi supérieure (29) de ladite oreille (15) est situé en-dessous dudit plan (P2) contenant ladite paroi supérieure (23) dudit pivot (13) relativement à une direction verticale.

7. Ensemble (1) de véhicule automobile, **caractérisé en ce qu'**il comporte :
- un porte-fusée (3) selon l'une quelconque des revendications 1 à 6,
- une rotule de direction (7), ledit axe (11) de ladite rotule de direction (7) étant reçu par ledit pivot (13) dudit porte-fusée (3) et ledit orifice taraudé (17) de ladite oreille (15) s'étendant en vis-à-vis de ladite biellette de direction (9),
- un organe d'assemblage de ladite rotule de direction (7) sur ledit porte-fusée (3).

8. Véhicule automobile comportant un ensemble (1), **caractérisé en ce que** ledit ensemble (1) est selon la revendication 7.

9. Procédé de démontage d'un ensemble (1) de véhicule automobile, ledit ensemble (1) étant selon la revendication 7, ledit procédé de démontage étant **caractérisé en ce qu'**il comporte les étapes suivantes visant à :
- retirer l'organe d'assemblage de ladite rotule de direction (7) sur ledit porte-fusée (3),
- insérer une vis de desserrage (35) dans ledit orifice taraudé (17) de ladite oreille (15),
- entraîner ladite vis de desserrage (35) en rotation jusqu'à ce que ladite vis de desserrage (35) vienne buter contre ladite biellette de direction (9) de ladite rotule de direction (7),
- poursuivre la rotation de ladite vis de desserrage (35) jusqu'à ce que l'axe (11) de ladite rotule de direction (7) libère le pivot (13) dudit porte-fusée (3).
